# EUROPEAN PATENT SPECIFICATION

(11) **EP 2 664 024 B1**
(45) Date of publication and mention of the grant of the patent: **28.02.2018**
(21) Application number: 12701564.2
(22) Date of filing: 09.01.2012
(51) Int. Cl.: H01Q 1/24, H01Q 1/48, H01Q 1/22

(54) **RESONATING ELEMENT FOR REDUCING RADIO-FREQUENCY INTERFERENCE IN AN ELECTRONIC DEVICE**
RESONATORELEMENT ZUR REDUZIERUNG VON FUNKFREQUENZINTERFERENZEN IN EINER ELEKTRONISCHEN VORRICHTUNG
ÉLÉMENTS RÉSONNANTS POUR RÉDUIRE LES INTERFÉRENCES AUX FRÉQUENCES RADIO DANS UN DISPOSITIF ÉLECTRONIQUE

(30) Priority: 31.01.2011 US 201113017568; 11.01.2011 US 201161431522 P
(43) Date of publication of application: 20.11.2013
(73) Proprietor: Apple Inc., Cupertino, CA 95014 (US)
(72) Inventor: MERZ, Nicholas, G.L., Cupertino, CA 95014 (US); MYERS, Scott, A., Cupertino, CA 95014 (US); TAN, Tang, Yew, Cupertino, CA 95014 (US); RANADE, Jaydeep, V., Cupertino, CA 95014 (US); PASCOLINI, Mattia, Cupertino, CA 95014 (US)
(74) Representative: Froud, Christopher Andrew
(86) International application number: PCT/US2012/020659
(87) International publication number: WO 2012/096892

(56) References cited:
- US-A1- 2007 236 397
- US-A1- 2008 316 121
- US-A1- 2010 123 640
- US-B1- 6 559 809

## Description

### Background

This relates generally to electronic devices, and, more particularly, to structures for reducing signal interference in electronic devices.

Electronic devices such as cellular telephones and other devices often contain wireless communications circuitry. The wireless communications circuitry may include, for example, cellular telephone transceiver circuits for communicating with cellular telephone networks. Wireless communications circuitry in an electronic device may also include wireless local area network circuits and other wireless circuits. Antenna structures are used in transmitting and receiving wireless signals.

Electronic devices also often contain displays. For example, liquid crystal displays are often provided in cellular telephones. Displays contain arrays of image pixels. For example, liquid crystal displays contain arrays of image pixels based on liquid crystal material. Electrodes in the arrays are used to apply controlled electric fields to the liquid crystal material to change its optical properties and thereby create an image on the display. Display driver circuits are used to generate drive signals for the electrodes in the array.

Challenges arise when mounting displays and wireless circuitry within electronic devices. In many devices, for example, space is at a premium, so there is a desire to locate antennas and displays in close proximity to each other. At the same time, the display driver circuits that are used in driving signals into a display can produce signals that can interfere with the operation of wireless circuits.

US 2010/0123640 A1 discloses an apparatus, a method and a computer program for wireless communication. The appended claims are characterised over this document. US 2008/316121 A1 discloses a wireless handheld electronic device. US 6,559,809 B1 discloses a planar antenna for wireless communications. US 2007/236397 A1 discloses an antenna device with antenna elements coupled to an anti-EMI plate of an electronic device.

It would therefore be desirable to provide ways in which to reduce signal interference between electronic components in an electronic device such as wireless electronic device components.

### Summary

There is provided an electronic device according to the appended claims. An electronic device is provided with a display such as a liquid crystal display. The display may have display driver circuits that drive signals onto the image pixels of the display.

The electronic device may include wireless circuits such as cellular telephone transceiver circuits and associated antenna structures. The antenna structures and transceiver circuits may be used to transmit and receive radio-frequency signals. A ground plane for the antenna structures may be located in the center of the electronic device under the display.

To reduce signal interference when using multiple components simultaneously in the electronic device, the electronic device may be provided with a resonating element that serves as an interference-reducing structure. The resonating element structure may be implemented using an L-shaped structure having an arm that extends parallel to one of the edges of the display. The resonating element may be used to reduce signal interference that might otherwise arise when simultaneously operating the display and the antenna structures or other circuitry in the electronic device.

Further features of the invention, its nature and various advantages will be more apparent from the accompanying drawings and the following detailed description of the preferred embodiments.

### Brief Description of the Drawings

FIG. 1 is a perspective view of an illustrative electronic device of the type that may be provided with a resonating element structure in accordance with an embodiment of the present invention.
FIG. 2 is a top interior view of an electronic device of the type shown in FIG. 1 in accordance with an embodiment of the present invention.
FIG. 3 is a diagram of the electronic device of that includes a resonating element structure in accordance with an embodiment of the present invention.
FIG. 4 is a perspective view of a resonating element structure in accordance with an embodiment of the present invention.
FIG. 5 is a perspective view of interior portions of an electronic device of the type shown in FIG. 1 showing where a resonating element structure of the type shown in FIG. 4 may be used in accordance with an embodiment of the present invention.

### Detailed Description

Electronic devices may be provided with wireless communications circuitry. The wireless communications circuitry may be used to support wireless communications in one or more wireless communications bands. Antenna structures in an electronic device may be used in transmitting and receiving radio-frequency signals.

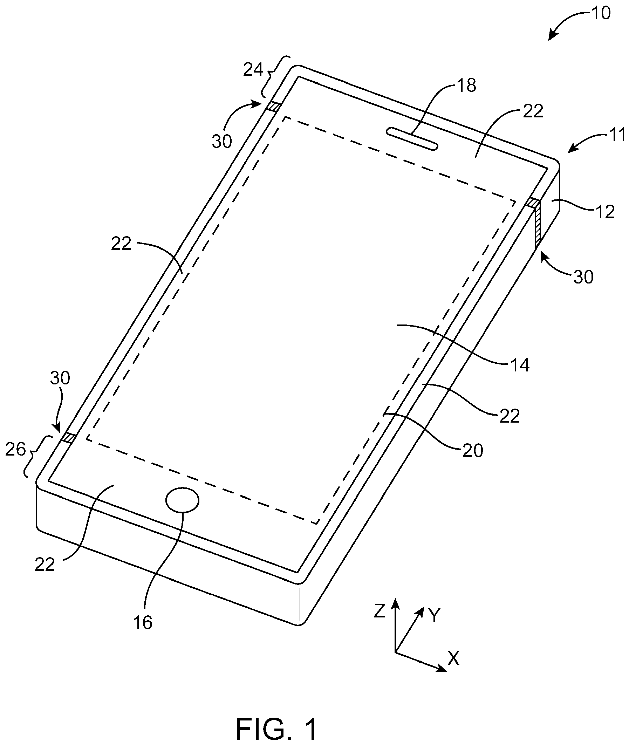

An illustrative electronic device that contains wireless communications circuitry is shown in FIG. 1. Device 10 of FIG. 1 may be a notebook computer, a tablet computer, a computer monitor with an integrated computer, a desktop computer, or other electronic equipment. If desired, electronic device 10 may be a portable device such as a cellular telephone, a media player, other handheld devices, a wrist-watch device, a pendant device, an earpiece device, or other compact portable device.

As shown in FIG. 1, device 10 may have a housing such as housing 11. Housing 11 may be formed from materials such as plastic, metal, carbon fiber and other fiber composites, ceramic, glass, wood, other materials, or combinations of these materials. Device 10 may be formed using a unibody construction in which some or all of housing 11 is formed from a single piece of material (e.g., a single cast or machined piece of metal, a single piece of molded plastic, etc.) or may be formed from frame structures, housing sidewall structures, and other structures that are assembled together using fasteners, adhesive, and other attachment mechanisms. In the illustrative arrangement shown in FIG. 1, housing 11 includes conductive peripheral housing member 12. Conductive peripheral housing member 12 may have a ring shape that runs around the rectangular periphery of device 10. One or more gaps such as gaps 30 may be formed in conductive peripheral housing member 12. Gaps such as gaps 30 may be filled with dielectric such as plastic and may interrupt the otherwise continuous shape of conductive peripheral housing member. Conductive peripheral housing member may have any suitable number of gaps 30 (e.g., more than one, more than two, three or more, less than three, etc.).

Conductive peripheral housing member 12 may be formed from a durable material such as metal. Stainless steel may be used for forming housing member 12 because stainless steel is aesthetically appealing, strong, and can be machined during manufacturing. Other metals may be used if desired. The rear face of housing 11 may be formed from plastic, glass, metal, ceramic composites, or other suitable materials. For example, the rear face of housing 11 may be formed form a plate of glass having regions that are backed by a layer of internal metal for added strength. Conductive peripheral housing member 12 may be relatively short in vertical dimension Z (e.g., to serve as a bezel for display 14) or may be taller (e.g., to serve as the sidewalls of housing 11 as shown in the illustrative arrangement of FIG. 1).

Device 10 may include components such as buttons, input-output port connectors, ports for removable media, sensors, microphones, speakers, status indicators, and other device components. As shown in FIG. 1, for example, device 10 may include buttons such as menu button 16. Device 10 may also include a speaker port such as speaker port 18 (e.g., to serve as an ear speaker for device 10).

One or more antennas may be formed in device 10. The antennas may, for example, be formed in locations such as locations 24 and 26 to provide separation from the conductive elements of display 14. Antennas may be formed using single band and multiband antenna structures. Examples of communications bands that may be covered by the antennas include cellular telephone bands (e.g., the bands at 850MHz, 900 MHz, 1800 MHz, 1900 MHz, and 2100 MHz), satellite navigation bands (e.g., the Global Positioning System band at 1575 MHz), wireless local area network bands such as the IEEE 802.11 (WiFi®) bands at 2.4 GHz and 5 GHz, the Bluetooth band at 2.4 GHz, etc. Examples of antenna configurations that may be used for the antennas in device 10 include monopole antennas, dipole antennas, strip antennas, patch antennas, inverted-F antennas, coil antennas, planar inverted-F antennas, open slot antennas, closed slot antennas, loop antennas, hybrid antennas that include antenna structures of multiple types, or other suitable antenna structures.

Device 10 may include one or more displays such as display 14. Display 14 may be a liquid crystal display (LCD), an organic light-emitting diode (OLED) display, a plasma display, an electronic ink display, etc. A touch sensor may be incorporated into display 14 (i.e., display 14 may be a touch screen). The touch sensor may be an acoustic touch sensor, a resistive touch sensor, a piezoelectric touch sensor, a capacitive touch sensor (e.g., a touch sensor based on an array of indium tin oxide capacitor electrodes), or a touch sensor based on other touch technologies.

Display 14 may be covered by a transparent planar conductive member such as a layer of glass or plastic. The cover layer for display 14, which is sometimes referred to as a cover glass layer or cover glass, may extend over substantially all of the front face of device 10, as shown in FIG. 1. The rectangular center portion of the cover glass (surrounded by dashed line 20 in FIG. 1) contains an array of image pixels and is sometimes referred to as the active portion of the display. The peripheral outer portion of the cover glass (i.e., rectangular peripheral ring 22 of FIG. 1) does not contain any active image pixels and is sometimes referred to as the inactive portion of display 14. A patterned opaque masking layer such as a peripheral ring of black ink may be formed under inactive portion 22 to hide interior device components from view by a user.

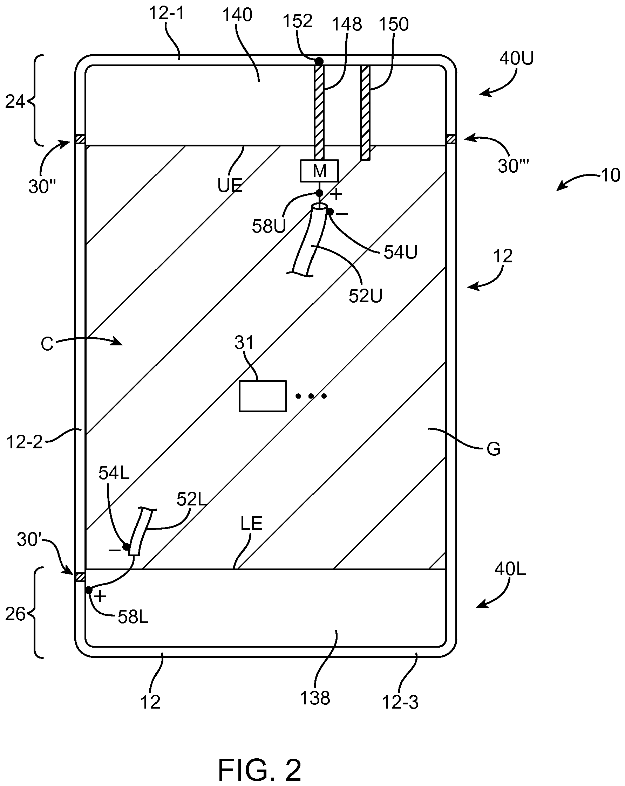

FIG. 2 is a top view of the interior of device 10 showing how antennas 40L and 40U may be implemented within housing 12. As shown in FIG. 2, ground plane G may be formed within housing 12. Ground plane G may form antenna ground for antennas 40L and 40U. Because ground plane G may serve as antenna ground, ground plane G may sometimes be referred to as antenna ground, ground, or a ground plane element (as examples). One or more printed circuit boards or other mounting structures may be used to mount components 31 in device 10. Components 31 may include radio-frequency transceiver circuits that are coupled to antennas 40U and 40L using transmission lines 52L and 52U, processors, application-specific integrated circuits, cameras, sensors, switches, connectors, buttons, and other electronic device components.

In central portion C of device 10, ground plane G may be formed by conductive structures such as a conductive housing midplate member (sometimes referred to as an internal housing plate or planer internal housing structures). The structures of ground plane G may be connected between the left and right edges of member 12. Printed circuit boards with conductive ground traces (e.g., one or more printed circuit boards used to mount components 31) may form part of ground plane G.

The midplate member may have one or more individual sections (e.g., patterned sheet metal sections) that are welded together. Portions of the midplate structures may be covered with insert-molded plastic (e.g., to provide structural support in portions of the interior of device where no conductive ground is desired, such dielectric-filled portions of antennas 40U and 40L in regions 24 and 26).

At ends 24 and 26 of device 10, the shape of ground plane G may be determined by the shapes and locations of conductive structures that are tied to ground. Ground plane G in the simplified layout of FIG. 2 has a straight upper edge UE and a straight lower edge LE. In actual devices, the upper and lower edges of ground plane G and the interior surface of conductive peripheral housing member 12 generally have more complex shapes determined by the shapes of individual conductive structures that are present in device 10. Examples of conductive structures that may overlap to form ground plane G and that may influence the shape of the inner surface of member 12 include housing structures (e.g., a conductive housing midplate structure, which may have protruding portions), conductive components (e.g., switches, cameras, data connectors, printed circuits such as flex circuits and rigid printed circuit boards, radio-frequency shielding cans, buttons and conductive button mounting structures), and other conductive structures in device 10. In the illustrative layout of FIG. 2, the portions of device 10 that are conductive and tied to ground to form part of ground plane G are shaded and are contiguous with central portion C.

Openings such as openings 138 and 140 (sometimes referred to as gaps) may be formed between ground plane G and respective portions of peripheral conductive housing member 12. Openings 138 and 140 may be filled with air, plastic, and other dielectrics. Openings 138 and 140 may be associated with antenna structures 40U and 40L.

Lower antenna 40L may be formed by a loop antenna structure having a shape that is determined at least partly by the shape of the lower portions of ground plane G and conductive housing member 12. In the example of FIG. 2, opening 138 is depicted as being rectangular, but this is merely illustrative. In practice, the shape of opening 138 may be dictated by the placement of conductive structures in region 26 such as a microphone, flex circuit traces, a data port connector, buttons, a speaker, etc.

Lower antenna 40L may be fed using an antenna feed made up of positive antenna feed terminal 58L and ground antenna feed terminal 54L. Transmission line 52L may be coupled to the antenna feed for lower antenna 40L. Gap 30' may form a capacitance that helps configure the frequency response of antenna 40L. If desired, device 10 may have conductive housing portions, matching circuit elements, and other structures and components that help match the impedance of transmission line 52L to antenna 40L.

Antenna 40U may be a two-branch inverted-F antenna. Transmission line 52U may be used to feed antenna 40U at antenna feed terminals 58U and 54U. Conductive structures 150 may form a shorting path that bridges dielectric opening 140 and electrically shorts ground plane G to peripheral housing member 12. Conductive structure 148 (which may be formed using structures of the type used in forming structures 150 or other suitable structures) and matching circuit M may be used to connect antenna feed terminal 58U to peripheral conductive member 12 at point 152. Conductive structures such as structures 148 and 150 (which are sometimes referred to as conductive paths) may be formed by flex circuit traces, conductive housing structures, springs, screws, welded connections, solder joints, brackets, metal plates, or other conductive structures.

Gaps such as gaps 30', 30", and 30"' (e.g., gaps 30 of FIG. 1) may be present in peripheral conductive member 12. A phantom gap may be provided in the lower right-hand portion of device 10 for aesthetic symmetry if desired. The presence of gaps 30', 30", and 30"' may divide peripheral conductive housing member 12 into segments. As shown in FIG. 2, peripheral conductive member 12 may include first segment 12-1, second segment 12-2, and third segment 12-3.

Segment 12-1 may form antenna resonating element arms for antenna 40U. In particular, a first portion (segment) of segment 12-1 may extend from point 152 (where segment 12-1 is fed) to the end of segment 12-1 that is defined by gap 30" and a second portion (segment) of segment 12-1 may extend from point 152 to the opposing end of segment 12-1 that is defined by gap 30"'. The first and second portions of segment 12-1 may form respective branches of an inverted F antenna and may be associated with respective low band (LB) and high band (HB) antenna resonances for antenna 40U. The relative positions of structures 148 and 150 along the length of member 12-1 may affect the response of antenna 40U and may be selected to tune antenna 40U. Antenna tuning adjustments may also be made by adjusting matching circuit M, by adjusting the configuration of components used in forming paths 148 and 150, by adjusting the shapes of opening 140, etc. Antenna 40L may likewise be adjusted.

With one illustrative arrangement, antenna 40L may cover the transmit and receive sub-bands in five communications bands (e.g., 850 MHz, 900 MHz, 1800 MHz, 1900 MHz, and 2100 MHz). Antenna 40U may, as an example, be configured to cover a subset of these five illustrative communications bands. For example, antenna 40U may be configured to cover a two receive bands of interest and, with tuning, four receive bands of interest.

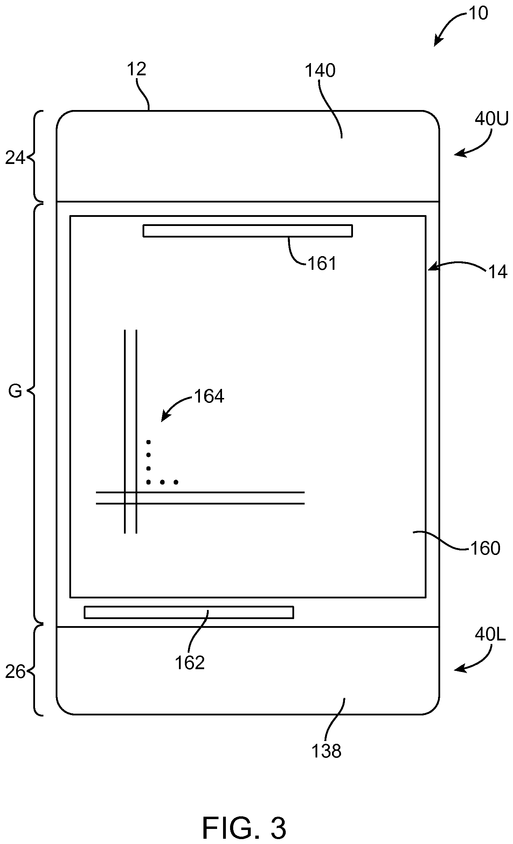

As shown in FIG. 3, display 14 may include display module 160. When enclosed within device 10 of FIG. 1, display module 160 may be mounted under a cover layer such as a layer of plastic or a glass layer (cover glass). Display module 160 (which is also sometimes referred to as a display) may include display driver circuitry 161. Display driver circuitry 161 may be used to drive signals into the display (e.g., circuitry 164). Display module 160 may be, for example, a liquid crystal display that includes a color filter array, a layer of liquid crystal material, and an array of image pixel electrodes and associated thin-film transistors (e.g., a thin-film transistor layer). The display driver circuitry may include a driver integrated circuit that is mounted to one end of the thin-film-transistor layer. Circuitry 164 may include an array of thin-film transistors and control lines that are used to distribute signals to the display from the display driver circuitry.

Components 31 (FIG. 2) may include radio-frequency transceiver circuitry (e.g., one or more cellular telephone receivers, one or more cellular telephone transmitters, receivers and transmitters associated with other bands, etc.). During radio-frequency transmissions using the radio-frequency transmitter, radio-frequency signals may be emitted by the antennas in device 10. For example, antenna 40L may emit cellular telephone signals, some of which may coupled into the control lines and other circuitry of display 164. During operation of driver circuitry 161, drive signals from driver circuitry 161 may mix with the signals from the cellular telephone transmitter (or other wireless transmitter). This tends to create undesired mixing products (e.g., intermodulation distortion or IMD). The mixing products may have frequencies that fall within one or more of the receive bands of the cellular telephone receivers in device 10 (or other wireless communications bands of interest) and thereby serve as a form of undesired signal interference whenever the display and cellular circuitry in device 10 are in simultaneous use.

To reduce undesired signal interference in device 10 (e.g., to reduce interference between antennas in device 10 and display 14 or to reduce interference between other components in device 10), one or more resonating element structures may be provided in device 10 such as resonating element structure 162. A resonating element structure such as structure 162 has an antenna-like quality in that it resonates most strongly around a particular electromagnetic signal frequency. In antennas, resonating elements emit radiation (during signal transmission operations) and receive radiation (in signal reception operations) in particular communications bands. In passive structures such as resonating element 162, no active signal transmission operations are performed (i.e., element 162 is not feed by a transmission line as with an antenna), but resonating element 162 may still exhibit a frequency response (peak signal absorption) that is centered about a particular frequency due to its geometry (e.g., its length relative to the wavelength of received electromagnetic signals) and its location relative to ground plane G. In the example of FIG. 3, structure 162 has been located adjacent to antenna 40L, but resonating elements such as resonating element 162 may be located elsewhere within the housing of device 10 if desired.

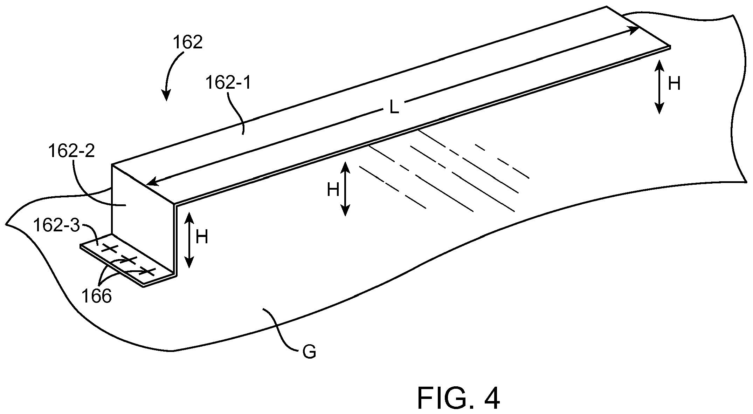

FIG. 4 is a perspective view of resonating element structure 162, showing how structure 162 may have a resonating element arm such as arm 162-1 that runs parallel to the surface of ground plane G at a height H. Branch 162-2 of structure 162 may run parallel to the surface normal for ground plane G (i.e., parallel to axis Z) and may electrically connect arm 162-1 to ground plane G. Portion 162-3 of structure 162 may be bent at a right angle to branch 162-2. Welds such as welds 166 or other fastening arrangements may be used to attach structure 162 to ground plane G. Structure 162 may be formed from a strip of metal or other suitable conductive element. The structures of ground plane G may include one or more electrically connected pieces of sheet metal (e.g., stainless steel). Structure 162 may be formed from stainless steel, copper, copper plated with gold, or other suitable conductors.

With the illustrative configuration for structure 162 that is shown in FIG. 4, structure 162 forms an L-shaped resonating element that resonates (absorbs electromagnetic energy) at a frequency that is related to its size (e.g., as in a quarter-wavelength L-shaped antenna resonating element). It has been determined that when structure 162 has a length L in the range of about 2 to 4 cm, interference that would otherwise adversely affect cellular telephone signal reception due to mixing products generated when simultaneously transmitting cellular telephone signals and operating display 14 can be significantly reduced. One possible mechanism for the interference reduction is the reduction in coupled electromagnetic energy into display 14 from antenna 40L during signal transmission operations that may result when some of the transmitted energy is dissipated instead in resonating element 162. Other interference reduction mechanisms may be involved as well.

The reduction in interference may be experienced in antenna structures that are adjacent to structure 162 (e.g., antenna 40L) and/or antenna structures at the other end of device 10 (e.g., antenna 40U). If desired, structure 162 may have shapes other than the illustrative shape of FIG. 4 (e.g., shapes in which arm 162-1 is bent to form a structure with multiple parallel and/or perpendicular sections with one, two, three bends or more, shapes with curved portions, shapes with multiple arms, etc.).

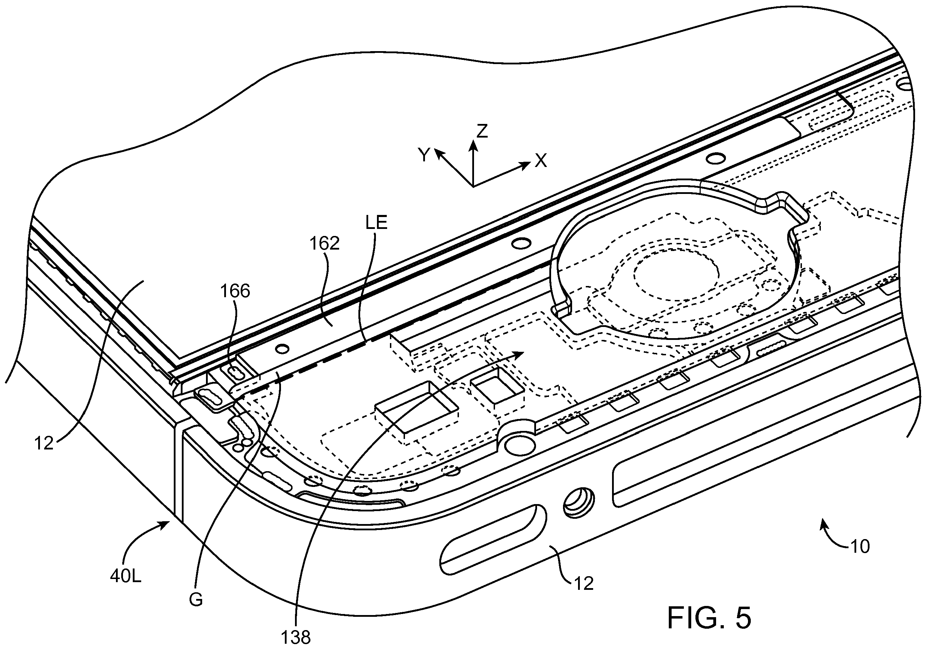

FIG. 5 is a perspective view of device 10 in the vicinity of antenna 40L and structure 162. Structure 162 may extend across the width of device 10, parallel to the lower edge LE of ground plane G. As shown in FIG. 5, the arm of structure 162 need not be rectangular and can include holes, cut-out regions (e.g., a curved section that accommodates the opening for button 16 of FIG. 1), etc. A plastic layer may be interposed between arm 162-1 and ground plane G (e.g., to support arm 162-1 at a desired value of height H). If desired, other dielectrics may be located between arm 162-1 and ground plane G. There may be any suitable number of structures 162 in device 10 (e.g., one at lower end 26, one at upper end 24, one at each end of device 10, etc.).

In accordance with an embodiment, an electronic device is provided that includes a display, an antenna, and a resonating element structure that reduces signal interference associated with simultaneous operation of the display and the antenna.

In accordance with another embodiment, the display has edges, the electronic device includes a ground plane that forms part of the antenna, and the resonating element structure includes an L-shaped structure having an arm that extends parallel to at least one of the edges of the display.

In accordance with another embodiment, the display has edges, the electronic device includes a ground plane that forms part of the antenna, and the resonating element structure includes an L-shaped structure having an arm that extends parallel to at least one of the edges of the display and a branch that extends substantially perpendicular to the ground plane.

In accordance with another embodiment, the electronic device also includes a peripheral conductive housing member having at least a portion that forms part of the antenna.

In accordance with another embodiment, the electronic device also includes a ground plane that forms part of the antenna and a peripheral conductive housing member having a portion that is separated from the ground plane by a dielectric-filled opening, where the portion of the peripheral conductive housing member forms part of the antenna.

In accordance with another embodiment, the resonating element is interposed between the display and the dielectric-filled opening.

In accordance with another embodiment, the display has edges and the resonating element structure includes an L-shaped structure having an arm that extends parallel to at least one of the edges of the display.

In accordance with another embodiment, the L-shaped structure has a branch that extends perpendicular to the ground plane and perpendicular to the arm.

In accordance with another embodiment, the branch is connected to the ground plane.

In accordance with another embodiment, the branch is welded to the ground plane.

In accordance with another embodiment, the electronic device also includes a ground plane associated with the antenna, where the resonating element structure includes an L-shaped structure having an arm that overlaps the ground plane and a branch that is connected to the ground plane, and plastic interposed between the arm and the ground plane.

In accordance with another embodiment, the electronic device also includes a display driver circuit in the display and a cellular telephone radio-frequency transceiver circuit coupled to the antenna that transmits radio-frequency signals using the antenna and that receives radio-frequency signals using the antenna, where the resonating element is configured to reduce interference in the received radio-frequency signals when the display driver circuit is operated while transmitting the radio-frequency signals.

In accordance with an embodiment, an electronic device is provided that includes a housing, a ground plane that forms part of an antenna, an electronic component having at least one edge, and a resonating element structure having a branch that is connected to the ground plane and an arm that extends over the ground plane parallel to the edge and that reduces signal interference associated with operating the antenna and the electronic component.

In accordance with another embodiment, the electronic component includes a display and the resonating element structure includes an L-shaped structure.

In accordance with another embodiment, the electronic device also includes a peripheral conductive housing member that surrounds the housing and forms part of the antenna, where the ground plane and the peripheral conductive housing member are separated by a dielectric-filled gap.

In accordance with another embodiment, the arm extends parallel to the dielectric-filled gap and is electrically coupled to the ground plane through the branch.

In accordance with an embodiment, an electronic device is provided that includes a housing, a display mounted in the housing, at least one upper antenna at an upper end of the housing above the display, at least one lower antenna at a low end of the housing below the display, and a resonating element structure configured to reduce interference between the display and at least one of the antennas.

In accordance with another embodiment, the electronic device also includes a rectangular ring-shaped conductive peripheral housing member that surrounds the housing, where the upper and lower antennas are formed from a ground plane and portions of the conductive peripheral housing member.

In accordance with another embodiment, the resonating element structure is interposed between the lower antenna and the display and the resonating element structure includes an arm that extends parallel to an edge of the display and a branch that is connected to the ground plane.

In accordance with another embodiment, the electronic device includes a handheld electronic device and the electronic device also includes a display driver circuit in the display and a cellular telephone radio-frequency transceiver circuit coupled to the upper and lower antennas, where the resonating element structure is configured to reduce interference in radio-frequency signals received using at least one of the antennas when the display driver circuit is operated while simultaneously using the cellular telephone radio-frequency transceiver circuit to transmit radio-frequency antenna signals.

The foregoing is merely illustrative of the principles of this invention and various modifications can be made by those skilled in the art without departing from the scope of the invention. The foregoing embodiments may be implemented individually or in any combination.

## Claims

1. An electronic device (10), comprising:
a display (14) having edges;
an antenna (40L); and
a ground plane (G) that forms part of the antenna,
a resonating element structure (162) that is interposed between the display (14) and the antenna (40L), wherein the resonating element structure (162) is disposed at a location (H) relative to the ground plane (G) and has a selected length (L) and the resonating element structure (162) reduces signal interference associated with simultaneous operation of display (14) and the antenna (40L), wherein the resonating element structure (162) is not fed by any transmission lines, the resonating element structure (162) comprises an L-shaped structure having an arm (162-1) that has a longitudinal axis that extends parallel to at least one of the edges of the display (14) and parallel to a front face of the electronic device (10), and a branch (162-2) that extends perpendicular to the arm (162-1) and substantially perpendicular to the ground plane (G) between the ground plane (G) and an edge of the arm (162-1) that is located at an end of the longitudinal axis of the arm (162-1), and wherein the arm (162-1) has a greater length than the branch (162-2).

2. The electronic device defined in claim 1 further comprising a peripheral conductive housing member (12) having at least a portion (12-3) that forms part of the antenna (40L).

3. The electronic device defined in claim 1 further comprising a peripheral conductive housing member having a portion (12-3) that is separated from the ground plane (G) by a dielectric-filled opening (138), wherein the portion of the peripheral conductive housing member forms part of the antenna (40L).

4. The electronic device defined in claim 3 wherein the resonating element (162) is interposed between the display and the dielectric-filled opening (138).

5. The electronic device defined in claim 1 wherein the branch (162-2) is connected to the ground plane (G).

6. The electronic device defined in claim 5 wherein the branch is welded (166) to the ground plane.

7. The electronic device defined in claim 1 wherein arm (162-1) overlaps the ground plane (G) and the branch (162-2) that is connected to the ground plane (G), further comprising:
plastic interposed between the arm (162-1) and the ground plane (G).

8. The electronic device defined in claim 7 further comprising:
a display driver circuit (161) in the display(14); and
a cellular telephone radio-frequency transceiver circuit (31) coupled to the antenna that transmits radio-frequency signals using the antenna and that receives radio-frequency signals using the antenna, wherein the resonating element (162) is configured to reduce interference in the received radio-frequency signals when the display driver circuit is operated while transmitting the radio-frequency signals.

## Patentansprüche

1. Elektronische Vorrichtung (10), die aufweist:
eine Anzeige (14) mit Kanten;
eine Antenne (40L); und
eine Erdungsebene (G), die Teil der Antenne bildet,
eine Resonatorelement-Struktur (162), die zwischen der Anzeige (14) und der Antenne (40L) angeordnet ist, wobei die Resonatorelement -Struktur (162) an einem Ort (H) angeordnet ist, der relativ zu der Erdungsebene (G) ist und eine ausgewählte Länge (L) hat, und wobei die Resonatorelement-Struktur (162) die Signalinterferenz, die mit dem gleichzeitigen Betrieb der Anzeige (14) und der Antenne (40L) verbunden ist, reduziert, wobei die Resonatorelement-Struktur (162) nicht durch irgendwelche Übertragungsleitungen gespeist wird, wobei die Resonatorelement-Struktur (162) eine L-förmige Struktur aufweist, mit einem Arm (162-1), der eine longitudinale Achse hat, die sich parallel zu zumindest einer der Kanten der Anzeige (14) und parallel zu einer vorderen Oberfläche der elektronischen Vorrichtung (10) erstreckt, und einen Zweig (162-2), der sich senkrecht zu dem Arm (162-1) und im Wesentlichen senkrecht zu der Erdungsebene (G) zwischen der Erdungsebene (G) und einer Kante des Armes (162-1) erstreckt, der an einem Ende der longitudinalen Achse des Armes (162-1) angeordnet ist, wobei der Arm (162-1) eine größere Länge als der Zweig (162-2) hat.

2. Elektronische Vorrichtung gemäß Anspruch 1, die weiter ein peripheres leitendes Gehäuseelement (12) aufweist, das zumindest einen Abschnitt (12-3) hat, der Teil der Antenne (40L) bildet.

3. Elektronische Vorrichtung gemäß Anspruch 1, die weiter ein peripheres leitendes Gehäuseelement aufweist, das einen Abschnitt (12-3) hat, der von der Erdungsebene (G) durch eine mit einem Dielektrikum gefüllte Öffnung (138) getrennt ist, wobei der Abschnitt des peripheren leitenden Gehäuseelementes einen Teil der Antenne (40L) bildet.

4. Elektronische Vorrichtung gemäß Anspruch 3, wobei das Resonatorelement (162) zwischen der Anzeige und der mit einem Dielektrikum gefüllten Öffnung (138) angeordnet ist.

5. Elektronische Vorrichtung gemäß Anspruch 1, wobei der Zweig (162-2) mit der Erdungsebene (G) verbunden ist.

6. Elektronische Vorrichtung gemäß Anspruch 5, wobei der Zweig an die Erdungsebene geschweißt (166) ist.

7. Elektronische Vorrichtung gemäß Anspruch 1, wobei der Arm (162-1) die Erdungsebene (G) überlappt und der Zweig (162-2), der mit der Erdungsebene (G) verbunden ist, weiter aufweist:
Kunststoff, der zwischen dem Arm (162-1) und der Erdungsebene (G) angeordnet ist.

8. Elektronische Vorrichtung gemäß Anspruch 7, die weiter aufweist:
eine Anzeigetreiberschaltung (161) in der Anzeige (14); und
eine Funkfrequenz-Transceiverschaltung (31) für ein Funktelefon, die an die Antenne gekoppelt ist, die Funkfrequenzsignale unter der Verwendung der Antenne überträgt und die Funkfrequenzsignale unter der Verwendung der Antenne empfängt, wobei das Resonatorelement (162) konfiguriert ist, um Interferenz in den empfangenen Funkfrequenzsignalen zu reduzieren, wenn die Anzeigetreiberschaltung betrieben wird, während die Funkfrequenzsignale übertragen werden.

## Revendications

1. Un dispositif électronique (10) comprenant :
un afficheur (14) avec des bords ;
une antenne (40L) ; et
un plan de masse (G) qui fait partie de l'antenne,
une structure d'élément résonateur (162) qui est interposée entre l'afficheur (14) et l'antenne (40L), dans lequel la structure d'élément résonateur (162) est disposée en un emplacement (H) par rapport au plan de masse (G) et possède une longueur sélectionnée (L) et la structure d'élément résonateur (162) réduit l'interférence de signal associée au fonctionnement simultané de l'afficheur (14) et de l'antenne (40L), dans lequel la structure d'élément résonateur (162) n'est alimentée par aucune ligne de transmission, la structure d'élément résonateur (162) comprend une structure en forme de L avec un bras (162-1) qui possède un axe longitudinal qui s'étend parallèlement à au moins l'un des bords de l'afficheur (14) et parallèlement à une face frontale du dispositif électronique (10), et une branche (162-2) qui s'étend perpendiculairement au bras (162-1) et substantiellement perpendiculaire au plan de masse (G) entre le plan de masse (G) et un bord du bras (162-1) qui est situé à une extrémité de l'axe longitudinal du bras (162-1), et dans lequel le bras (162-1) présente une longueur plus grande que la branche (162-2).

2. Le dispositif électronique défini dans la revendication 1, comprenant en outre un organe de boitier conducteur périphérique (12) possédant au moins une partie (12-3) qui fait partie de l'antenne (40L).

3. Le dispositif électronique défini dans la revendication 1, comprenant en outre un organe de boitier conducteur périphérique possédant une partie (12-3) qui est séparée du plan de masse (G) par une ouverture remplie d'un diélectrique (138), dans lequel la partie de l'organe de boitier conducteur périphérique fait partie de l'antenne (40L).

4. Le dispositif électronique défini dans la revendication 3, dans lequel l'élément résonateur (162) est interposé entre l'afficheur et l'ouverture remplie d'un diélectrique (138).

5. Le dispositif électronique défini dans la revendication 1, dans lequel la branche (162-2) est connectée au plan de masse (G).

6. Le dispositif électronique défini dans la revendication 5, dans lequel la branche est soudée (166) au plan de masse.

7. Le dispositif électronique défini dans la revendication 1, dans lequel le bras (162-1) chevauche le plan de masse (G) et la branche (162-2) qui est connectée au plan de masse (G), comprenant en outre :
du plastique interposé entre le bras (162-1) et le plan de masse (G).

8. Le dispositif électronique défini dans la revendication 7, comprenant en outre :
un circuit de pilotage d'afficheur (161) dans l'afficheur (14) ; et
un circuit émetteur-récepteur radiofréquence de téléphonie cellulaire (31) couplé à l'antenne qui émet des signaux radiofréquence en utilisant l'antenne et qui reçoit des signaux radiofréquence en utilisant l'antenne, dans lequel l'élément résonateur (162) est configuré pour réduire les interférences aux signaux radiofréquence reçus lorsque le circuit de pilotage d'afficheur fonctionne pendant l'émission des signaux radiofréquence.
